**Europäisches Patentamt**

**European Patent Office**

**Office européen des brevets**

(19)

(11) Veröffentlichungsnummer : **0 058 319**
**B1**

(12) # EUROPÄISCHE PATENTSCHRIFT

(45) Veröffentlichungstag der Patentschrift :
**07.05.86**

(51) Int. Cl.⁴ : **C 08 L 11/00**

(21) Anmeldenummer : **82100610.3**

(22) Anmeldetag : **29.01.82**

(54) Mischungen aus Chloroprenpolymeren und ihre Herstellung.

(30) Priorität : **13.02.81 DE 3105339**

(43) Veröffentlichungstag der Anmeldung :
**25.08.82 Patentblatt 82/34**

(45) Bekanntmachung des Hinweises auf die Patenterteilung : **07.05.86 Patentblatt 86/19**

(84) Benannte Vertragsstaaten :
**DE FR GB**

(56) Entgegenhaltungen :
**GB-A- 1 148 690**
**US-A- 3 147 318**
**US-A- 3 714 296**
**US-A- 3 719 649**
**US-A- 4 234 704**
**Die Akte enthält technische Angaben, die nach dem Eingang der Anmeldung eingereicht wurden und die nicht in dieser Patentschrift enthalten sind.**

(73) Patentinhaber : **BAYER AG**
**Konzernverwaltung RP Patentabteilung**
**D-5090 Leverkusen 1 Bayerwerk (DE)**

(72) Erfinder : **Eisele, Ulrich, Dr.**
**Alfred-Kubin-Strasse 13**
**D-5090 Leverkusen (DE)**
Erfinder : **Müller, Peter, Dr.**
**Ahornstrasse 2**
**D-5014 Kerpen (DE)**
Erfinder : **Musch, Rüdiger, Dr.**
**Altenberger Dom Strasse 169**
**D-5060 Bergisch-Gladbach (DE)**
Erfinder : **Göbel, Wilhelm, Dr.**
**Max-Beckmann-Strasse 37**
**D-5090 Leverkusen (DE)**
Erfinder : **Pampus, Gottfried, Dr.**
**Hahnenweg 2**
**D-5000 Köln (DE)**

EP 0 058 319 B1

**Beschreibung**

Die Erfindung betrifft Polychloropren-Elastomere, die sich durch eine gute Verarbeitbarkeit und hohe Zugfestigkeit auszeichnen und ihre herstellung. Unter guter Verarbeitbarkeit werden beispielsweise die Maßhaltigkeit des Extrudate, erniedrigte Walzfellbildungszeiten, höhere Spritzleistungen usw. verstanden.

Eine Möglichkeit, Polychloropren-Elastomere mit solchen vorteilhaften Verarbeitungseigenschaften herzustellen besteht darin, einem Latex eines benzollöslichen Polychloropren (Sol-Polymer) den Latex eines vernetzten Polychloropren (Gel-Polymer) zuzumischen und den Kautschuk beispielsweise durch Gefrierkoagulation zu isolieren.

Zur Herstellung des Gel-Polymeren können verschiedene Methoden angewandt werden, wie sie beispielsweise in DE-AS 12 29 716, US-PS 31 47 318, DE-AS 12 48 921, DE-AS 12 71 990, DE-OS 15 70 089, DE-OS 17 95 187, DE-OS 17 70 651, DE-OS 20 08 673, DE-OS 17 20 107 beschrieben sind.

Der Zusatz eines solchen Gel-Polymeren zu einem Sol-Polymeren hatte bisher den Nachteil, daß die mechanischen Eigenschaften der Vulkanisate, beispielsweise die Zugfestigkeit, verschlechtert wurden.

Es wurde nun gefunden, daß die vorteilhaften mechanischen Eigenschaften der Vulkanisate des Sol-Polymeren im wesentlichen erhalten bleiben, daß man aber gleichzeitig die vorteilhaften Verarbeitungseigenschaften der Abmischungen aus Sol- und Gel-Polymeren erhält, wenn man ein Sol-Polymer mit einem Gel-Polymer, dessen Kristallisationshalbwertzeit nicht größer ist als die des Sol-Polymeren, im Gewichtsverhältnis 1 : 4 bis 4 : 1 vermischt. Bevorzugt ist ein Gel-Polymer, dessen Kristallisationshalbwertzeit höchstens halb so groß ist wie die Kristallisationshalbwertzeit des Sol-Polymeren. Als Definition der Kristallisationshalbwertzeit gilt die Definition nach H.G. Zachmann, Fortschr. Hochpolymer-Forschung, 1964, Bd. 3, Seite 633.

Das Gel-Polymer kann hergestellt werden durch Copolymerisation von Chloropren mit einem bifunktionellen oder mehrfunkitionellen Monomeren, durch Homopolymerisation von Chloropren unter vernetzenden Bedingungen, durch Vernetzung von Polychloropren durch ein vernetzendes Agens oder durch Strahlung.

Bevorzugt ist die Herstellung des Gel-Polymeren durch Copolymerisation von Chloropren und einem bifunktionellen Monomeren, besonders bevorzugt ist die Copolymerisation von Chloropren und Ethylenglykoldimethacrylat.

Die Reaktionsbedingungen zur Herstellung des Gel-Polymeren mit den erfindungsgemäßen Eigenschaften können vom Fachmann unter Berücksichtigung der bekannten Zusammenhänge zwischen z. B. Kristallisationshalbwertzeit, Polymerisationstemperatur und gehalt des Copolymeren an bifunktionellen Comonomeren leicht ermittelt werden.

Die Polymerisation des löslichen und des vernetzten Chloroprenpolymeren wird in Emulsion kontinuierlich oder diskontinuierlich nach üblichen Methoden durchgeführt.

Bevorzugt ist die Initiierung der Polymerisation mit Formamidinsulfinsäure oder mit Kaliumpersulfat/Dithionit.

Vorzugsweise wird die Polymerisation des Gel-Polymeren bei 5 bis 20 °C durchgeführt. Mischung der beiden Latices erfolgt unter Rühren bei 5 bis 30 °C.

## Beispiel 1 (Vergleichsbeispiel)

Herstellung des Sol-Polymeren

| | |
|---|---|
| Chloropren | 100,00 g |
| n-Dodecylmercaptan | 0,25 g |
| Entsalztes Wasser | 120,00 g |
| Natriumsalz einer disproportionierten Abietinsäure | 4,00 g |
| Ätznatron | 0,60 g |
| Natriumsalz des Kondensationsproduktes aus Naphthalinsulfonsäure und Formaldehyd | 0,60 g |

wurden unter Stickstoff bei 40 °C polymerisiert, wobei eine 1 gew.-%ige wäßrige Lösung von Formamidinsulfinsäure kontinuierlich dem Ansatz zufloß.

Bei einem Monomerenumsatz von 65 % wurde die Reaktion mit 0,04 g einer 2,5 gew.-%igen Lösung von Diethylhydroxylamin abgestoppt und das Monomere durch Wasserdampfdestillation entfernt.

Herstellung des Gel-Polymeren

| | |
|---|---|
| Chloropren | 90,50 g |
| Ethylenglykoldimethacrylat | 9,50 g |
| n-Dodecylmercaptan | 0,40 g |
| Entsalztes Wasser | 150,00 g |
| Natriumsalz einer disproportionierten Abientinsäure | 3,50 g |

2

| Ätznatron | 0,30 g |
|---|---|
| Natriumsalz des Kondensationsproduktes aus Naphthalinsulfonsäure und Formaldehyd | 0,60 g |

wurden unter Stickstoff bei 45 °C polymerisiert, wobei eine 2,5 gew.-%ige wäßrige Lösung von Formamidinsulfinsäure kontinuierlich dem Ansatz zufloß.

Bei einem Monomerenumsatz von 78 % wurde die Reaktion wie vorstehend beschrieben abgestoppt.

Ein Teil des Sol-Polymer-Latex und ein Teil des Gel-Polymer-Latex wurden getrennt aufgearbeitet. Die verbleibenden Reste der Latices wurden im gewünschten Verhältnis gemischt, der Kautschuk wurd durch Gefrierkoagulation isoliert.

Anschließend wurde folgende Mischung hergestellt :

| Kautschuk | 100,00 g |
|---|---|
| Stearinsäure | 0,50 g |
| Magnesiumoxid | 4,00 g |
| Phenyl-β-naphthylamin | 2,00 g |
| Aktivruß N 762 | 30,00 g |
| Zinkoxid | 5,00 g |
| Ethylenthioharnstoff | 0,50 g |

Die Mischung wurde bei 150 °C in 40 Min. vulkanisiert, die Zug-Dehnungs-Prüfungen wurden am Normstab ausgeführt.

Beispiel 2 (erfindungsgemäß)

Das Sol-Polymer wurde wie in Beispiel 1 hergestellt.

Herstellung des Gel-Polymeren

| Chloropren | 95,00 g |
|---|---|
| Ethylenglykoldimethacrylat | 5,00 g |
| n-Dodecylmercaptan | 0,30 g |
| Ölsäure | 0,25 g |
| Entsalztes Wasser | 150,00 g |
| Natriumsalz einer disproportionierten Abietinsäure | 5,46 g |
| Ätznatron | 0,77 g |
| Natriumsalz des Kondensationsproduktes aus Naphthalinsulfonsäure und Formaldehyd | 0,60 g |
| Anthrachinon-2-sulfonsäure | 0,006 g |
| Kaliumpersulfat | 0,04 g |

wurden unter Stickstoff bei 10 °C polymerisiert, wobei eine 2,5 gew-%ige wäßrige Lösung von Formamidinsulfinsäure kontinuierlich dem Ansatz zufloß.

Bei einem Monomerenumsatz von 78 % wurde die Reaktion wie in Beispiel 1 beschrieben abgestoppt.

Die Vulkanisate wurden auf die gleiche Weise hergestellt wie in Beispiel 1.

Die folgende Tabelle zeigt die relativen Zugfestigkeiten (Sol-Polymer = 1,00), stellvertretend für die mechanischen Eigenschaften, wie sie an den Vulkanisaten der Kautschuke aus Beispiel 1 und Beispiel 2 erhalten wurden.

| Sol-Polymer $[g]$ | 100 | 80 | 60 | 40 | 20 |
|---|---|---|---|---|---|
| Gel-Polymer $[g]$ | 0 | 20 | 40 | 60 | 80 |
| relative Zug-festigkeit | | | | | |
| Beispiel 1 | 1,00 | 0,88 | 0,72 | 0,59 | 0,46 |
| Beispiel 2 | 1,00 | 1,01 | 1,00 | 1,02 | 0,98 |

Die folgende Tabelle zeigt die Kristallisationshalbwerzeit des Sol-Polymeren, der Gel-Polymeren und von Abmischungen, die 60 Gew.-% Sol-Polymer und 40 Gew.-% (bezogen auf Gesamtmischung) Gel-Polymer enthalten. Die Kristallisationshalbwertzeiten wurden bei —5 °C gemessen.

3

Kristallisationshalbwertzeit (h)

| | |
|---|---|
| Sol-Polymer | 15 h |
| Gel-Polymer nach Beispiel 1 | 50 h |
| Gel-Polymer nach Beispiel 2 | 6 h |
| Sol/Gel-Polymer nach Beispiel 1 | 30 h |
| Sol/Gel-Polymer nach Beispiel 2 | 15 h |

**Patentansprüche**

1. Polychloprenmischung enthaltend ein Sol-Polymer und ein Gel-Polymer im Gewichtsverhältnis 1 : 4 bis 4 : 1, dadurch gekennzeichnet, daß die Kristallisationshalbwertzeit der Gelkomponente nicht größer ist als die Kristallisationshalbwertzeit der Solkomponente.

2. Polychloprenmischung nach Anspruch 1, dadurch gekennzeichnet, daß die Kristallisationshalbwertzeit der Gelkomponente höchstens halb so groß ist wie die Kristallisationshalbwertzeit der Solkomponente.

3. Polychloprenmischung nach Anspruch 1, dadurch gekennzeichnet, daß die Gelkomponente durch Copolymerisation von Chloropren mit einem bifunktionellen Comonomeren bei Temperaturen zwischen 5 und 20 °C hergestellt wurde.

4. Polychloprenmischung nach Anspruch 3, dadurch gekennzeichnet, daß als bifunktionelles Comonomeres Ethylenglykoldimethacrylat eingesetzt wird.

5. Verfahren zur Herstellung von Chloprenmischungen enthaltend ein Sol-Polymer und ein Gel-Polymer im Gewichtsverhältnis 1 : 4 bis 4 : 1, dadurch gekennzeichnet, daß man ein Gel-Polymer, dessen Kristallisationshalbwertzeit nicht größer ist als die des Sol-Polymeren, mit dem Sol-Polymer bei Temperaturen zwischen 5 und 30 °C unter Rühren vermischt.

6. Verfahren nach Anspruch 5, dadurch gekennzeichnet, daß ein Gel-Polymer verwendet wird, das durch Polymerisation bei Temperaturen zwischen 5 und 20 °C erhalten wurde.

**Claims**

1. A polychloroprene mixture containing a sol polymer and a gel polymer in a weight ratio of from 1 : 4 to 4 : 1, characterised in that the crystallisation half-life period of the gel component is not longer than the crystallisation half-life period of the sol component.

2. A polychloroprene mixture according to claim 1, characterised in that the crystallisation half-life period of the gel component is at the most half as long as the crystallisation half-life period of the sol component.

3. A polychloroprene mixture according to claim 1, characterised in that the gel component has been produced by the copolymerisation of chloroprene with a bifunctional comonomer at temperatures of between 5 and 20 °C.

4. A polychloroprene mixture according to claim 3, characterised in that ethylene glycol dimethacrylate is used as the bifunctional comonomer.

5. A process for the production of chloroprene mixtures containing a sol polymer and a gel polymer in a weight ratio of from 1 : 4 to 4 : 1, characterised in that a gel polymer, the crystallisation half-life period of which is not longer than that of the sol polymer, is mixed with the sol polymer at temperatures of between 5 and 30 °C with stirring.

6. A process according to claim 5, characterised in that a gel polymer is used which has been obtained by polymerisation at temperatures of between 5 and 20 °C.

**Revendications**

1. Mélange de polychloroprènes contenant un polymère sol et un polymère gel dans un rapport en poids de 1 : 4 à 4 : 1, caractérisé en ce que le temps de demi-cristallisation du composant gel n'est pas supérieur au temps de demi-cristallisation du composant sol.

2. Mélange de polychloroprènes suivant la revendication 1, caractérisé en ce que le temps de demi-cristallisation du composant gel ne dépasse pas la moitié du temps de demi-cristallisation du composant sol.

3. Mélange de polychloroprènes suivant la revendication 1, caractérisé en ce que le composant gel a été produit par copolymérisation de chloroprène avec un comonomère bifonctionnel à des températures comprises entre 5 et 20 °C.

4. Mélange de polychloroprènes suivant la revendication 3, caractérisé en ce qu'on utilise comme comonomère bifonctionnel le diméthacrylate d'éthylèneglycol.

5. Procédé de production de mélanges de chloroprènes contenant un polymère sol et un polymère gel dans un rapport en poids de 1 : 4 à 4 : 1, caractérisé en ce qu'on mélange un polymère gel, dont le temps de demi-cristallisation n'est pas supérieur à celui du polymère sol, avec le polymère sol à des températures comprises entre 5 et 30 °C sous agitation.

6. Procédé suivant la revendication 5, caractérisé en ce qu'on utilise un polymère gel qui a été obtenu par polymérisation à des températures comprises entre 5 et 20 °C.